# EUROPEAN PATENT SPECIFICATION

(11) **EP 3 404 539 B1**
(45) Date of publication and mention of the grant of the patent: **24.05.2023**
(21) Application number: 17001918.6
(22) Date of filing: 23.11.2017
(51) Int. Cl.: G06F 9/50, G06F 9/54, G06F 16/22, G06F 16/248, G06F 16/25

(54) **STATISTICAL COMPUTING FOR ANALYTICS**
STATISTISCHE BERECHNUNG FÜR ANALYTIK
CALCUL STATISTIQUE POUR ANALYTIQUE

(30) Priority: 16.05.2017 US 201762507044 P; 04.10.2017 US 201715724947
(43) Date of publication of application: 21.11.2018
(73) Proprietor: SAP SE, 69190 Walldorf (DE)
(72) Inventor: Bergman, Eran, 69190 Walldorf (DE); Jahankhani, Saeed, 69190 Walldorf (DE)
(74) Representative: Müller-Boré & Partner Patentanwälte PartG mbB

(56) References cited:
- V. TABLAN ET AL: "GATECloud.net: a platform for large-scale, open-source text processing on the cloud", ROYAL SOCIETY OF LONDON. PHILOSOPHICAL TRANSACTIONS.MATHEMATICAL, PHYSICAL AND ENGINEERING SCIENCES, vol. 371, no. 1983, 10 December 2012 (2012-12-10), pages 20120071-20120071, XP055484495, GB ISSN: 1364-503X, DOI: 10.1098/rsta.2012.0071

## Description

### CROSS REFERENCE TO RELATED APPLICATION

The present application claims the benefit and priority of U.S. Provisional Application No. 62/507,044, filed May 16, 2017, entitled "Statistical Computing for Cloud Analytics".

### TECHNICAL FIELD

The present application relates to a method, a non-transitory machine-readable medium and a system for executing scripts on data to generate visualizations of the data.

### BACKGROUND

Today, many computing systems and computing devices generate and store an increasing amount of data. The data may contain information that becomes meaningful once the data is processed. One way to provide meaning to the data is to process the data and present the data in visualizations. Examples of visualizations include histograms, pie charts, scatter plots, cartograms, choropleths, dot distribution maps, matrices, etc. Different visualizations may present different information. For instance, one visualization may present revenue sales data, another visualization may present population density data, yet another visualization may present store location data, etc.

Tablan V, Roberts I, Cunningham H, Bontcheva K; "GATECloud.net: a platform for large-scale, open-source text processing on the cloud", ROYAL SOCIETY OF LONDON*.*

### PHILOSOPHICAL TRANSACTIONS.MATHEMATICAL, PHYSICAL AND ENGINEERING

*SCIENCES, December 10, 2012; Vol: 371, Nr: 1983, Page(s): 20120071* describes cloud computing as increasingly being regarded as a key enabler of the 'democratization of science', because on-demand, highly scalable cloud computing facilities enable researchers anywhere to carry out data-intensive experiments. In the context of natural language processing (NLP), algorithms tend to be complex, which makes their parallelization and deployment on cloud platforms a non-trivial task. Disclosed approach relates to a cloud-based platform for large-scale NLP research-GATECloud. net. It enables researchers to carry out data-intensive NLP experiments by harnessing the vast, on-demand compute power of the Amazon cloud. Important infrastructural issues are dealt with by the platform, completely transparently for the researcher: load balancing, efficient data upload and storage, deployment on the virtual machines, security and fault tolerance.

### SUMMARY

The invention is set out in the appended set of claims.

In one aspect, a non-transitory machine-readable medium stores a program. The program receives from a client device a request to execute a set of scripts on a set of data in a data model. The program further identifies an available virtual machine (VM) in a plurality of VMs comprised in a data processing system. The program also loads a runtime instance configured to execute the set of scripts onto the identified VM. The program further instructs the runtime instance to execute the set of scripts in order to generate a visualization of the set of data. The program also sends the generated visualization of the set of data to the client device.

In the above-stated aspect, the request is a first request. The program further receives a second request for the set of data, retrieve the set of data, store the set of data in a cache storage, generate a unique identifier associated with the set of data, and send the unique identifier to the client device. The first request includes the unique identifier. The program further retrieves the set of data from the cache storage.

In the above-stated aspect, the program further compresses the set of data and the set of scripts into a single file. Instructing the runtime instance to execute the set of scripts in order to generate the visualization of the set of data includes send the single file to the runtime instance. The program also removes the runtime instance from the identified VM and returns the VM as an available VM in the plurality of VMs. In some cases, the request to execute the set of scripts on the set of data specifies the use of an external VM implemented on a system separate from the data processing system. In such a case, the request further includes connection information to connect to the external runtime instance and a connection with the runtime instance is established using the connection information. The set of scripts is then executed on the external runtime instance. In some embodiments, the set of scripts may be written using a statistical computing scripting language.

In another aspect, a method receives from a client device a request to execute a set of scripts on a set of data in a data model. The method further identifies an available virtual machine (VM) in a plurality of VMs comprised in a data processing system. The method also loads a runtime instance configured to execute the set of scripts onto the identified VM. The method further instructs the runtime instance to execute the set of scripts in order to generate a visualization of the set of data. The method also sends the generated visualization of the set of data to the client device.

In the method according to the other aspect, the request is a first request. The method further receives a second request for the set of data, retrieve the set of data, store the set of data in a cache storage, generate a unique identifier associated with the set of data, and send the unique identifier to the client device. The first request includes the unique identifier. The method also retrieves the set of data from the cache storage.

In the method according to the other aspect, the method further compresses the set of data and the set of scripts into a single file. Instructing the runtime instance to execute the set of scripts in order to generate the visualization of the set of data includes sending the single file to the runtime instance. The method also removes the runtime instance from the identified VM and returns the VM as an available VM in the plurality of VMs. In some cases, the request to execute the set of scripts on the set of data specifies the use of an external VM implemented on a system separate from the data processing system. In such a case, the request further includes connection information to connect to the external runtime instance and a connection with the runtime instance is established using the connection information. The set of scripts is then executed on the external runtime instance. In some embodiments, the set of scripts may be written using a statistical computing scripting language.

In yet another aspect, a system includes a set of processing units and a non-transitory computer-readable medium that stores instructions. The instructions cause at least one processing unit to receive from a client device a request to execute a set of scripts on a set of data in a data model. The instructions further cause the at least one processing unit to identify an available virtual machine (VM) in a plurality of VMs comprised in a data processing system. The instructions also cause the at least one processing unit to load a runtime instance configured to execute the set of scripts onto the identified VM. The instructions further cause the at least one processing unit to instruct the runtime instance to execute the set of scripts in order to generate a visualization of the set of data. The instructions also cause the at least one processing unit to send the generated visualization of the set of data to the client device.

In the system according to yet the other aspect, the request is a first request. The instructions further cause the at least one processing unit to receive a first request for the set of data, retrieve the set of data, store the set of data in a cache storage, generate a unique identifier associated with the set of data, and send the unique identifier to the client device. The first request includes the unique identifier. The instructions also cause the at least one processing unit to retrieve the set of data from the cache storage.

In the system according to yet the other aspect, the instructions further cause the at least one processing unit to compress the set of data and the set of scripts into a single file. Instructing the runtime instance to execute the set of scripts in order to generate the visualization of the set of data includes sending the single file to the runtime instance. The instructions also cause the at least one processing unit to remove the runtime instance from the identified VM and return the VM as an available VM in the plurality of VMs. In some cases, the request to execute the set of scripts on the set of data specifies the use of an external VM implemented on a system separate from the data processing system. In such a case, the request further includes connection information to connect to the external runtime instance and a connection with the runtime instance is established using the connection information. The set of scripts is then executed on the external runtime instance.

The following detailed description and accompanying drawings provide a better understanding of the nature and advantages of the present invention.

### BRIEF DESCRIPTION OF THE DRAWINGS

FIG. 1 illustrates a system for providing visualizations of data according to the present disclosure.
FIGS. 2A and 2B illustrate an example data flow through the system illustrated in FIG. 1 according to the present disclosure.
FIGS. 3A-3D illustrate an example graphical user interface for providing visualizations according to some embodiments.
FIG. 4 illustrates a process for providing visualizations of data according to the present disclosure.
FIG. 5 illustrates an exemplary computer system, in which various embodiments may be implemented.
FIG. 6 illustrates an exemplary computing device, in which various embodiments may be implemented.
FIG. 7 illustrates system for implementing various embodiments described above.

### DETAILED DESCRIPTION

In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include modifications and equivalents of the features and concepts described herein.

Described herein are techniques for providing visualizations of data. In some embodiments, a system that provides a client device with visualizations of data stored according to a data model. The client device may specify the data to be used for the visualization and provide scripts used to generate the visualization. Then the client device sends the system a request to generate the visualization in a runtime environment. When the system receives the request, the system retrieves the specified data and then sends the retrieved data and the scripts to a runtime instance for execution. Once, the scripts are executed on the runtime instance, the system retrieves the output from the scripts and sends it to the client device for presentation.

In some embodiments, a data model is defined as one or more views and one or more tables associated with the one or more views. A view can be a filter associated with one or more tables that provides access to one or more attributes (e.g., columns) of the one or more tables. Alternatively or in addition, a view may provide access to data calculated based on and/or derived from one or more attributes of the one or more tables. In some instances, a view can be a filter associated with one or more views and/or tables that provides access to one or more attributes of the one or more views and/or tables. In some embodiments, a data model definition specifies a one or more tables that includes a set of measures and a set of dimensions. In some such embodiments, a measure may be an attribute in the one or more tables that is configured to store a numeric value while a dimension may be an attribute in the one or more tables that is configured to store a value associated with a measure that is used for categorizing the measure.

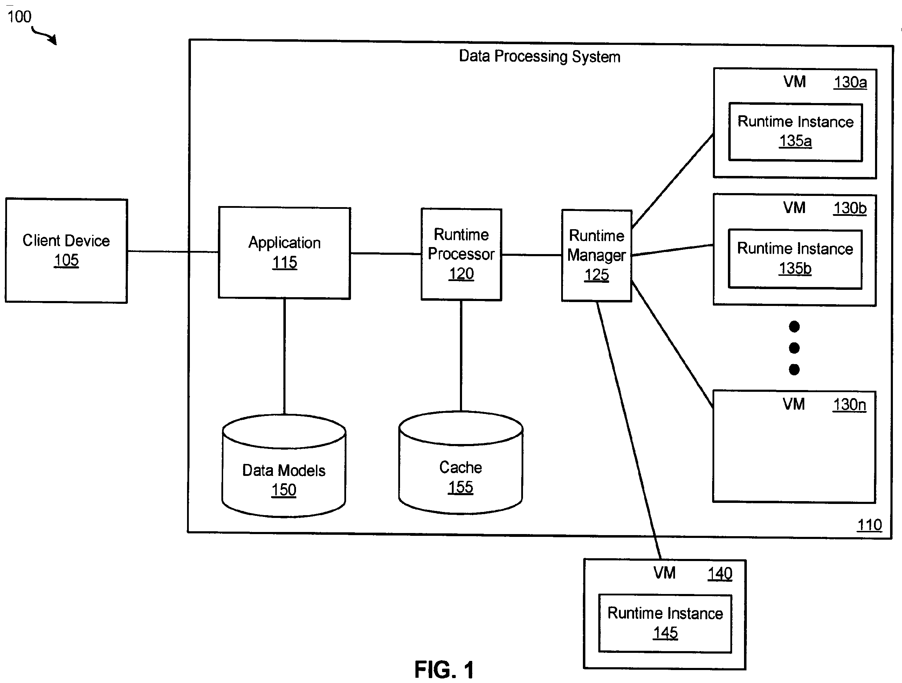

FIG. 1 illustrates a system 100 for providing visualizations of data according to the present disclosure. As shown, system 100 includes client device 105, data processing system 110, and virtual machine (VM) 140. Client device 105 is configured to communicate and interact with data processing system 110. For instance, client device 105 may specify data to be used for a visualization of data stored according to a data model, provide scripts for generating the visualization, and then send application 115 the scripts along with a request to generate the visualization based on the specified data. Once data processing system 110 processes the request, client device 105 receives the visualization from data processing system 110 and presents it (e.g., by displaying it on a display of client device 105) to a user of client device 105.

As shown in FIG. 1, data processing system 110 includes application 115, runtime processor 120, runtime manager 125, VMs 130a-130n and storages 150 and 155. Data models storage 150 is configured to store definitions of data models and data organized according to the data models. Cache storage 155 is configured to cache sets of data (e.g., data stored according to a data model, a subset of data stored according to a data model, etc.). In some embodiments, storages 150 and 155 are implemented in a single physical storage while, in other embodiments, storages 150 and 155 may be implemented across several physical storages. While FIG. 1 shows storages 150 and 155 as part of data processing system 110, one of ordinary skill in the art will appreciated that storages 150 and/or 155 may be external to in data processing system 110 in some embodiments.

Application 115 is a software application operating on (e.g., hosted on) data processing system 110 that is accessed by client device 105. Application 115 may be any number of different types of applications. For instance, application 115 may be an analytics application, a data management application, a human capital management application, an enterprise management application, a customer relationship management application, a financial management application, etc. Application 115 receives requests from client device 105. Specifically, application 115 receives from client device 105 a request to generate a visualization of data stored according to a data model and scripts used for generating the visualization. In response to the request, application 115 retrieves data specified for the visualization from data models storage 150. Then, application 115 sends the retrieved data and the scripts to runtime processor 120 for processing. Once the visualization is generated, application 115 receives the visualization from runtime processor 120 and forwards it to client device 105.

Runtime processor 120 is responsible for processing requests to execute scripts on data. Specifically, runtime processor 120 receives from application 115 a request to generate a visualization, data for the visualization, and scripts used to generate the visualization. In some embodiments, the scripts used for generating visualizations are written in a statistical computing scripting language (e.g., an R scripting language). A statistical computing scripting language can provides statistical computing functions (e.g., linear modeling, nonlinear modeling, classical statistical tests, time-series analysis, classification, clustering, machine learning, etc.) and graphics. In some such embodiments, a runtime environment (e.g., runtime instance 135 or runtime instance 145 in this example) that supports such a scripting language is used to execute scripts written in the scripting language. Different versions of such a runtime environment provide different statistical computing functions and features.

In response to the request to generate the visualization, runtime processor 120 sends runtime manager 125 a request for a runtime instance 135 to execute the scripts. Runtime processor 120 receives from runtime manager 125 connection information for connecting to a runtime instance 135. Next, runtime processor 120 establishes a connection with the runtime instance 135 using the connection information and sends the data for the visualization and the scripts to the runtime instance 135 via the connection. Further, runtime processor 120 compresses the data for the visualization and the scripts into a single file (e.g., a zip file), sends the single file to the runtime instance 135 via the connection, and instructs the runtime instance 135 to execute the scripts. Once the runtime instance 135 has executed the scripts, runtime processor 120 may retrieve from the runtime instance 135 outputs from the execution of the scripts. In some embodiments, the output from the execution of the scripts includes one or more visualizations of the data specified for the visualizations. Runtime processor 120 then sends the output to application 115. Lastly, runtime processor 120 instructs runtime manager 125 to dispose of the runtime instance 135.

In some instances the request to generate the visualization specifies the use of an external runtime instance (runtime instance 145 in this example) and includes connection information to connect to the external runtime instance. For such a request, runtime processor 120 establishes a connection with runtime instance 145 using the connection information provided in the request and executes the scripts on runtime instance 145 in the same or similar manner as that described above for executing scripts on a runtime instance 135 except runtime processor 120 does not instruct runtime manager 125 to dispose of runtime instance 145.

Runtime manager 125 manages runtime environments used for executing scripts. As shown in FIG. 1, runtime manager 125 also manages a pool of VMs 130a-n. When runtime manager 125 receives a request for a runtime environment from runtime processor 120, runtime manager 125 identifies an available VM 130, loads an image of a runtime instance 135 on the identified VM 130, and starts the VM 130. In FIG. 1, VM 130a and 130b are being used since each of them have a runtime instance 135 running on the VM 130 while VM 130n is available since it does not have a runtime instance 135 running on it. Runtime manager 125 determines the connection information (e.g., IP address, port, etc.) for connecting to the runtime instance 135 on the VM 130 and sends the connection information to runtime processor 120. Runtime manager 125 may also receive from runtime processor 120 a request to dispose a runtime instance 135. In response to such a request, runtime manager 125 identifies the VM 130 on which the runtime instance 135 is operating, removes the image of the runtime instance 135 from the VM 130, and then returns the VM 130 back into the pool of available VMs 130.

VMs 130a-130n are virtual machines that are configured to load and run images of runtime instance 135. In some embodiments, VMs 130a-n are implemented on a single physical computing device while, in other embodiments, VMs 130a-n are implemented on several physical computing devices. Still, in some embodiments, each of the VMs 130a-n is implemented on a separate physical computing device. A runtime instance 135 is a runtime environment configured execute scripts written in a statistical computing scripting language (e.g., an R scripting language). VM 140 is a virtual machine that is configured to load and run runtime instance 145. Runtime instance 145 is a runtime environment configured to execute scripts written in a statistical computing scripting language (e.g., an R scripting language). Further, VM 140 is implemented on a system (e.g., a third-party system) separate from data processing system 110.

The system illustrated in FIG. 1 shows a client device and a data processing system. One of ordinary skill in the art will appreciate that multiple client devices configured in a same or similar manner as client device 105 may be included in the system. As such, the client devices interact with the data processing system in the same or similar manner as that described above by reference to client device 105.

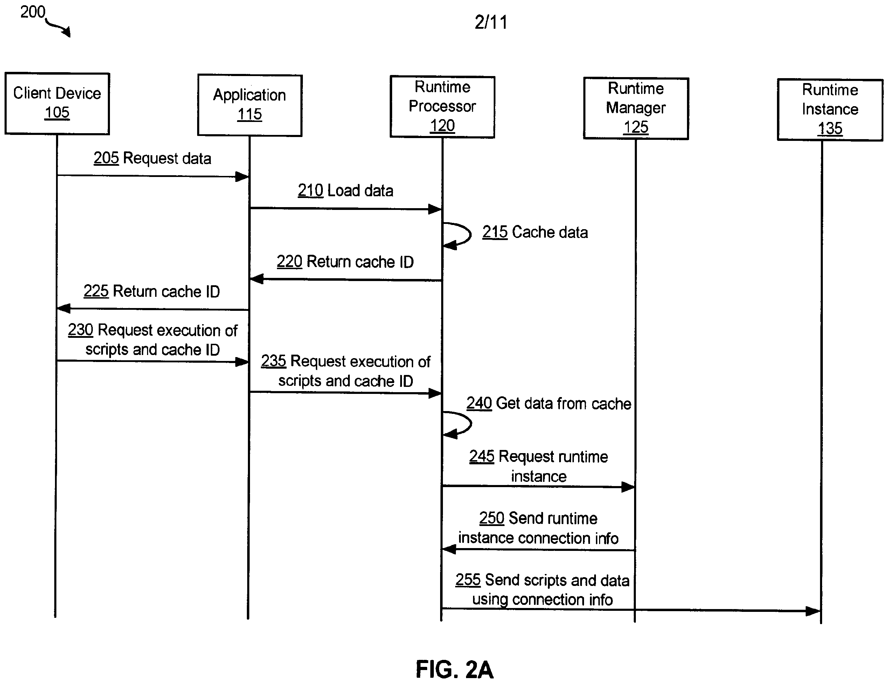

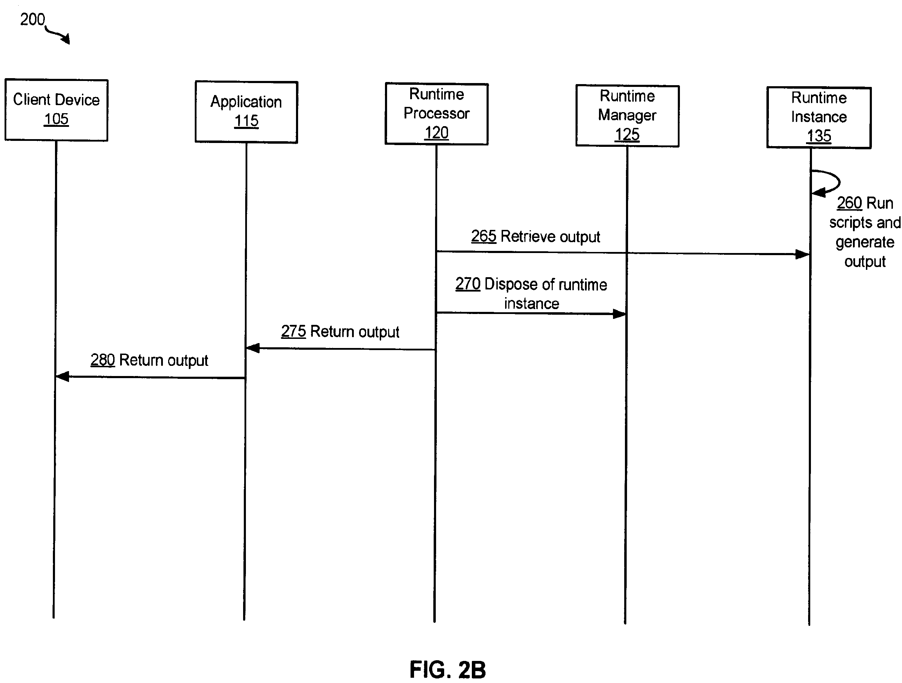

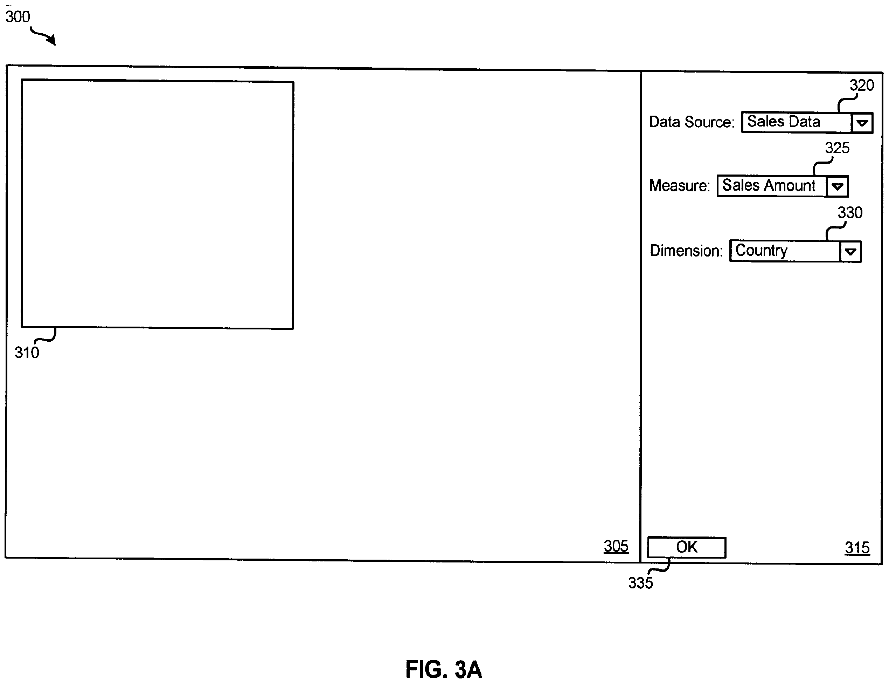

An example operation of system 100 will now be described by reference to FIGS. 2A, 2B, and 3A-3D. FIGS. 2A and 2B illustrate an example data flow through system 100 according to the present disclosure. FIGS. 3A-3D illustrate an example graphical user interface (GUI) 300 for providing visualizations according to some embodiments. As illustrated in FIG. 3A, GUI 300 includes display area 305 and display area 315. For this example, display area 305 is configured to provide visualizations of data. In FIG. 3A, display area 305 is provided a blank visualization 310 and display area 315 is providing selectable user interface (UI) items 320-330 (e.g., drop-down menu controls). UI item 320 is for selecting a data source (e.g., a dataset stored according to a data model), UI item 325 is for selecting a measure in the data source (e.g., a measure in a data model according to which data in the data source is stored), and UI item 330 is for selecting a dimension in the data source (e.g., a dimension in a data model according to which data in the data source is stored).

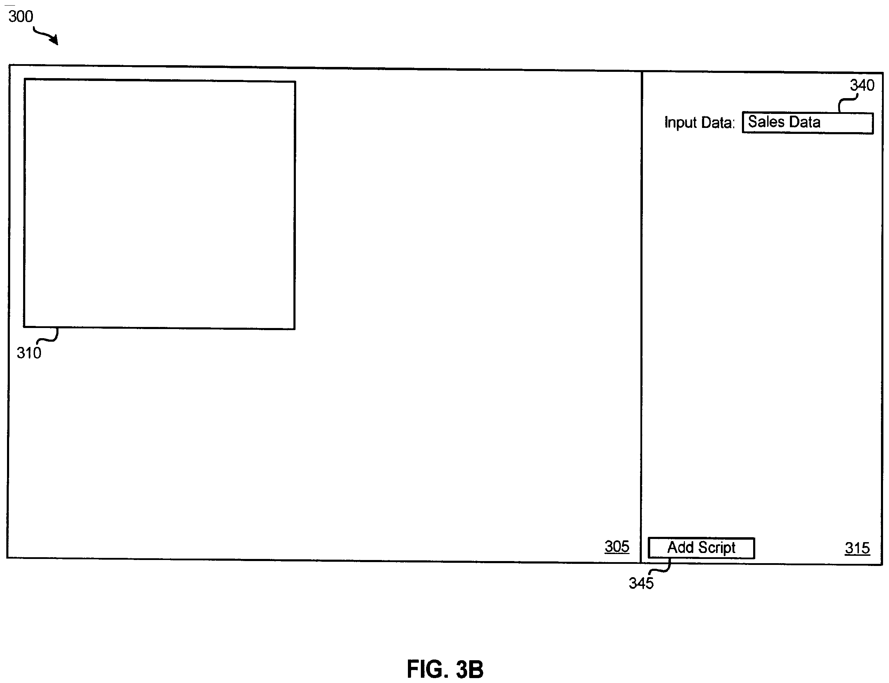

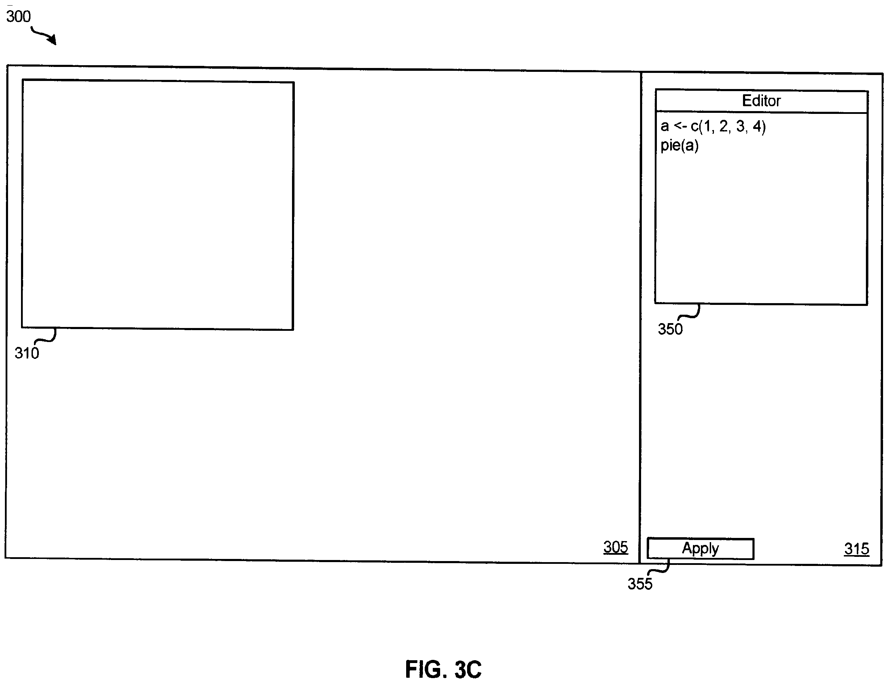

Referring to FIG. 2A, the operation of system 100 begins with client device 105 sending, at 205, a request for data to application 115. For example, the request for data is specified by a user of client device 105 via GUI 300 illustrated in FIG. 3A. As shown, the user of client device 105 has specified the data source to be a data model named sales data, a measure in the data model named sales amount, and a dimension in the data model named country. The user of client device 105 may select UI item 335 to transition to GUI 300 shown in FIG. 3B. FIG. 3B illustrates GUI 300, which includes UI item 345. UI item 345 is configured to invoke a scripting tool for writing scripts. Selection of UI item 345 transitions to GUI 300 illustrated in FIG. 3C. As shown in FIG. 3C, GUI 300 includes script tool 350 and UI item 355, which is for requesting execution of the scrip provided in script tool 350. Client device 105 sends the request for data based on the specified data source, measure, and dimension when the user of client device 105 selects UI item 355. In response to the request for data, application 115 retrieves the specified data from data models storage 150. In some embodiments, application 115 performs pre-processing operations to the retrieved data. For example, data stored in data models storage 150 is stored according to a data model. The data models used to store data in data models storage 150 (e.g., account data models) is different than the data models used in a runtime instances 135 (e.g., keyfigure data models). Thus, in some embodiments, application 115 converts the data retrieved from data models storage 135 into a format that can be stored according to a data model used in a runtime instance 135.

Next, application 115 sends, at 210, a request to load the data as well as the data itself to runtime processor 120. When runtime processor 120 receives the data, runtime processor 120 stores, at 215, the data in cache storage 155, generates a cache ID, which is a unique identifier associated with the data, and returns, at 220, the cache ID to application 115. Application 115, in turn, returns, at 225, the cache ID to client device 105. Client device 105 then sends, at 230, a request for execution of scripts along with the scripts (the script illustrated in FIG. 3C for example) and the cache ID to application 115, which forwards them to runtime processor 120.

Runtime processor 120 then retrieves, at 240, the data from cache storage 155 associated with the cache ID. Next, runtime processor 120 sends, at 250, a request for a runtime instance to runtime manager 125. When runtime manager 125 receives the request, runtime manager 125 identifies an available VM, loads an image of a runtime instance 135 on the identified VM 130, and starts the VM 130. Runtime manager 125 then determines the connection information (e.g., IP address, port, etc.) for connecting to the runtime instance 135 on the VM 130 and sends, at 250, the connection information to runtime processor 120. Upon receiving the connection information, runtime processor 120 establishes a connection with the runtime instance 135 using the connection information, compresses the data for the visualization and the scripts into a single file (e.g., a zip file), sends, at 255, the single file to the runtime instance 135 via the connection, and instructs the runtime instance 135 to execute the scripts.

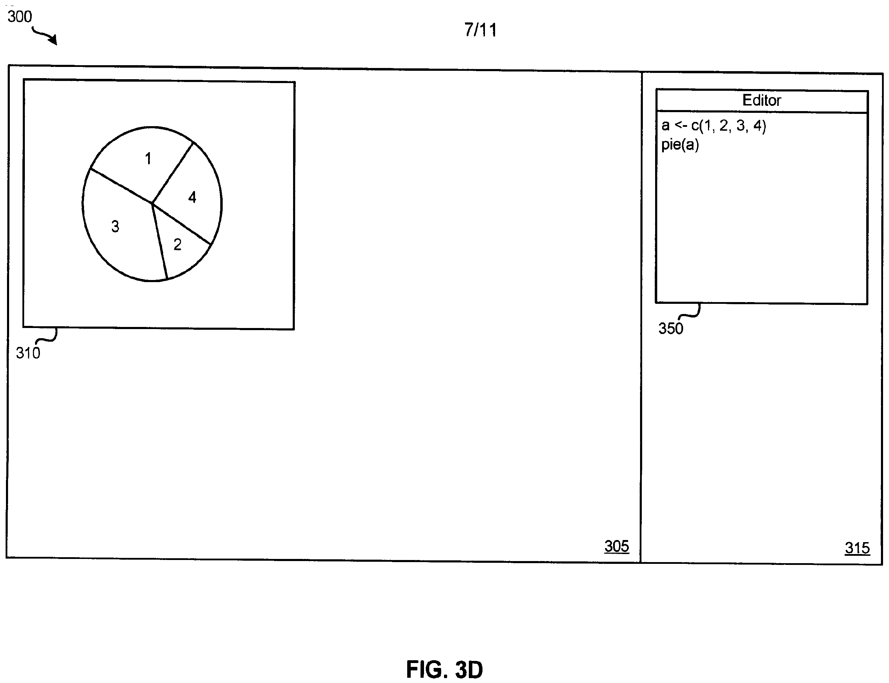

Referring now to FIG. 2B, runtime instance 135 runs, at 260, the scripts and generates an output based on execution of the scripts. Further, runtime instance 135 compresses the output into a single file (e.g., a zip file). Once runtime instance 135 generates the output, runtime processor 120 retrieves, at 265, the output from runtime instance 135. Next, runtime processor 120 sends, at 270, a request to dispose of the runtime instance to runtime manager 125. Upon receiving this request, runtime manager 125 identifies the VM 130 on which the runtime instance 135 is operating, removes the image of the runtime instance 135 from the VM 130, and then returns the VM 130 back into the pool of available VMs 130. After sending runtime manager 125 the request to dispose of the runtime instance, runtime processor 120 returns, at 275, the output to application, which, in turn, returns, at 280, the output to client device 105 for presentation to the user of client device. FIG. 3D illustrates GUI 300 after client device 105 presents the output from the execution of the script illustrated in FIG. 3C. As shown in FIG. 3D, the output of the script is presented via visualization 310 in GUI 300. Visualization 310 shows a pie chart of four variables (1, 2, 3, and 4 in this example).

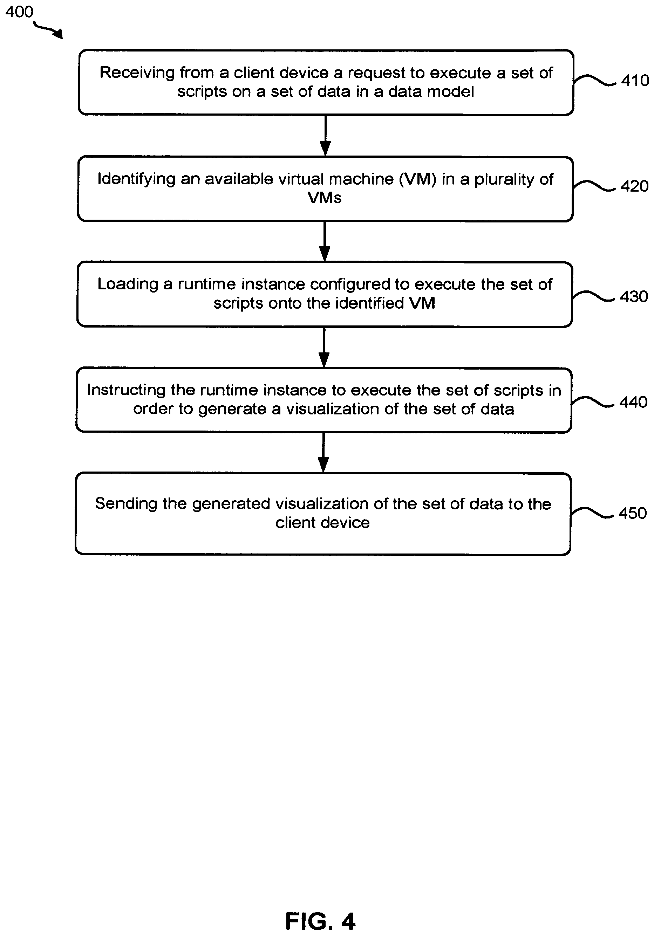

FIG. 4 illustrates process 400 for providing visualizations of data according to the present disclosure. Data processing system 110 performs process 400. Process 400 starts by receiving, at 410, from a client computing device, a request to execute a set of scripts on a set of data in a data model. Referring to FIGS. 1, 2A, 3A, and 3C as an example, a user of client device 105 may specify a data model as a data source, one or more measure of a data model, and one or more dimensions of the data model using GUI 300 illustrated in FIG. 3A, provide a script using script tool 350 illustrated in FIG. 3C, and then select UI item 355 illustrated in FIG. 3C. In response to the selection of UI item 355, client device 105 may send a request to execute the script on the specified data.

Next, process 400 identifies, at 420, an available VM in a plurality of VMs. Referring to FIG. 1, runtime manager 125 identifies an available VM 130 among the VMs 130a-n when runtime manager 125 receives a request for a runtime instance from runtime processor 120. Process 400 then, loads, at 430, a runtime instance configured to execute the set of scripts onto the identified VM. Further, runtime manager 125 can load an image of runtime instance 135 and starts the VM 130. Runtime manager 125 determines the connection information (e.g., IP address, port, etc.) for connecting to the runtime instance 135 on the VM 130 and sends the connection information to runtime processor 120. Runtime processor 120 uses the connection information to establish a connection to the runtime instance 135.

After loading the runtime instance, process 400 instructs, at 440, the runtime instance to execute the set of scripts in order to generate a visualization of the set of data. Further, runtime processor 120 instructs the runtime instance 135 operating on the VM 130 to execute the set of scripts via the connection that runtime processor 120 established with the runtime instance 135. Once the runtime instance 135 has executed the scripts, runtime processor 120 retrieves the output from the execution of the scripts (the visualization). Finally, process 400 sends, at 450, the generated visualization of the set of data to the client device.

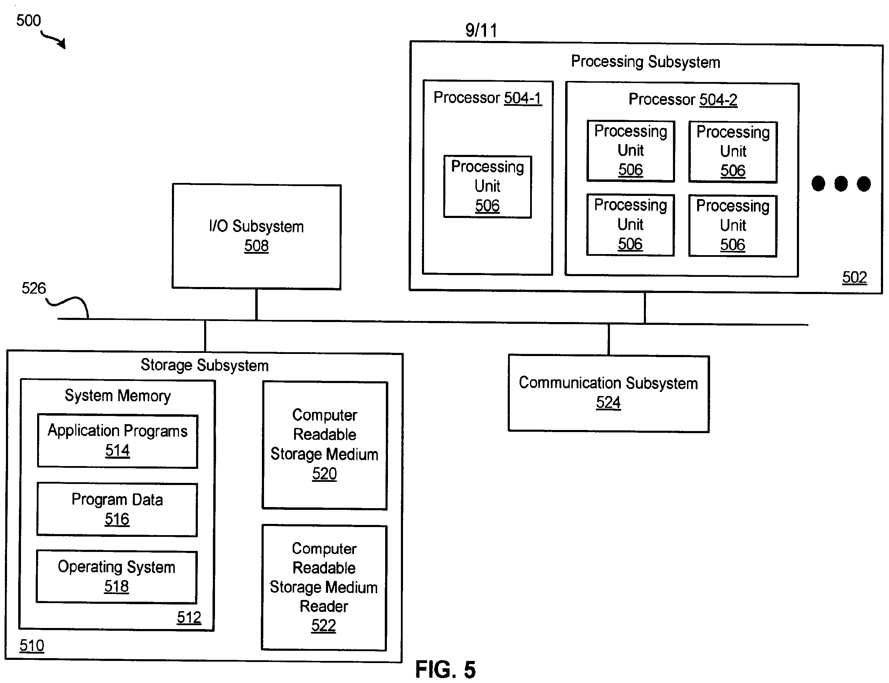

FIG. 5 illustrates an exemplary computer system 500 for implementing various embodiments described above. For example, computer system 500 may be used to implement client device 105 and data processing system 110. Computer system 500 may be a desktop computer, a laptop, a server computer, or any other type of computer system or combination thereof. Some or all elements of application 115, runtime processor 120, runtime manager 125, VMs 130a-n, or combinations thereof can be included or implemented in computer system 500. In addition, computer system 500 can implement many of the operations, methods, and/or processes described above (e.g., process 400). As shown in FIG. 5, computer system 500 includes processing subsystem 502, which communicates, via bus subsystem 526, with input/output (I/O) subsystem 508, storage subsystem 510 and communication subsystem 524.

Bus subsystem 526 is configured to facilitate communication among the various components and subsystems of computer system 500. While bus subsystem 526 is illustrated in FIG. 5 as a single bus, one of ordinary skill in the art will understand that bus subsystem 526 may be implemented as multiple buses. Bus subsystem 526 may be any of several types of bus structures (e.g., a memory bus or memory controller, a peripheral bus, a local bus, etc.) using any of a variety of bus architectures. Examples of bus architectures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnect (PCI) bus, a Universal Serial Bus (USB), etc.

Processing subsystem 502, which can be implemented as one or more integrated circuits (e.g., a conventional microprocessor or microcontroller), controls the operation of computer system 500. Processing subsystem 502 may include one or more processors 504. Each processor 504 may include one processing unit 506 (e.g., a single core processor such as processor 504-1) or several processing units 506 (e.g., a multicore processor such as processor 504-2). In some embodiments, processors 504 of processing subsystem 502 may be implemented as independent processors while, in other embodiments, processors 504 of processing subsystem 502 may be implemented as multiple processors integrate into a single chip or multiple chips. Still, in some embodiments, processors 504 of processing subsystem 502 may be implemented as a combination of independent processors and multiple processors integrated into a single chip or multiple chips.

In some embodiments, processing subsystem 502 can execute a variety of programs or processes in response to program code and can maintain multiple concurrently executing programs or processes. At any given time, some or all of the program code to be executed can reside in processing subsystem 502 and/or in storage subsystem 510. Through suitable programming, processing subsystem 502 can provide various functionalities, such as the functionalities described above by reference to process 400, etc.

I/O subsystem 508 may include any number of user interface input devices and/or user interface output devices. User interface input devices may include a keyboard, pointing devices (e.g., a mouse, a trackball, etc.), a touchpad, a touch screen incorporated into a display, a scroll wheel, a click wheel, a dial, a button, a switch, a keypad, audio input devices with voice recognition systems, microphones, image/video capture devices (e.g., webcams, image scanners, barcode readers, etc.), motion sensing devices, gesture recognition devices, eye gesture (e.g., blinking) recognition devices, biometric input devices, and/or any other types of input devices.

User interface output devices may include visual output devices (e.g., a display subsystem, indicator lights, etc.), audio output devices (e.g., speakers, headphones, etc.), etc. Examples of a display subsystem may include a cathode ray tube (CRT), a flat-panel device (e.g., a liquid crystal display (LCD), a plasma display, etc.), a projection device, a touch screen, and/or any other types of devices and mechanisms for outputting information from computer system 500 to a user or another device (e.g., a printer).

As illustrated in FIG. 5, storage subsystem 510 includes system memory 512, computer-readable storage medium 520, and computer-readable storage medium reader 522. System memory 512 may be configured to store software in the form of program instructions that are loadable and executable by processing subsystem 502 as well as data generated during the execution of program instructions. In some embodiments, system memory 512 may include volatile memory (e.g., random access memory (RAM)) and/or non-volatile memory (e.g., read-only memory (ROM), programmable read-only memory (PROM), erasable programmable read-only memory (EPROM), electrically erasable programmable read-only memory (EEPROM), flash memory, etc.). System memory 512 may include different types of memory, such as static random access memory (SRAM) and/or dynamic random access memory (DRAM). System memory 512 may include a basic input/output system (BIOS), in some embodiments, that is configured to store basic routines to facilitate transferring information between elements within computer system 500 (e.g., during start-up). Such a BIOS may be stored in ROM (e.g., a ROM chip), flash memory, or any other type of memory that may be configured to store the BIOS.

As shown in FIG. 5, system memory 512 includes application programs 514 (e.g., application 115), program data 516, and operating system (OS) 518. OS 518 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Computer-readable storage medium 520 may be a non-transitory computer-readable medium configured to store software (e.g., programs, code modules, data constructs, instructions, etc.). Many of the components (e.g., application 115, runtime processor 120, runtime manager 125, and VMs 130a-n) and/or processes (e.g., process 400) described above may be implemented as software that when executed by a processor or processing unit (e.g., a processor or processing unit of processing subsystem 502) performs the operations of such components and/or processes. Storage subsystem 510 may also store data used for, or generated during, the execution of the software.

Storage subsystem 510 may also include computer-readable storage medium reader 522 that is configured to communicate with computer-readable storage medium 520. Together and, optionally, in combination with system memory 512, computer-readable storage medium 520 may comprehensively represent remote, local, fixed, and/or removable storage devices plus storage media for temporarily and/or more permanently containing, storing, transmitting, and retrieving computer-readable information.

Computer-readable storage medium 520 may be any appropriate media known or used in the art, including storage media such as volatile, non-volatile, removable, non-removable media implemented in any method or technology for storage and/or transmission of information. Examples of such storage media includes RAM, ROM, EEPROM, flash memory or other memory technology, compact disc read-only memory (CD-ROM), digital versatile disk (DVD), Blu-ray Disc (BD), magnetic cassettes, magnetic tape, magnetic disk storage (e.g., hard disk drives), Zip drives, solid-state drives (SSD), flash memory card (e.g., secure digital (SD) cards, CompactFlash cards, etc.), USB flash drives, or any other type of computer-readable storage media or device.

Communication subsystem 524 serves as an interface for receiving data from, and transmitting data to, other devices, computer systems, and networks. For example, communication subsystem 524 may allow computer system 500 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication subsystem 524 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication subsystem 524 may provide components configured for wired communication (e.g., Ethernet) in addition to or instead of components configured for wireless communication.

One of ordinary skill in the art will realize that the architecture shown in FIG. 5 is only an example architecture of computer system 500, and that computer system 500 may have additional or fewer components than shown, or a different configuration of components. The various components shown in FIG. 5 may be implemented in hardware, software, firmware or any combination thereof, including one or more signal processing and/or application specific integrated circuits.

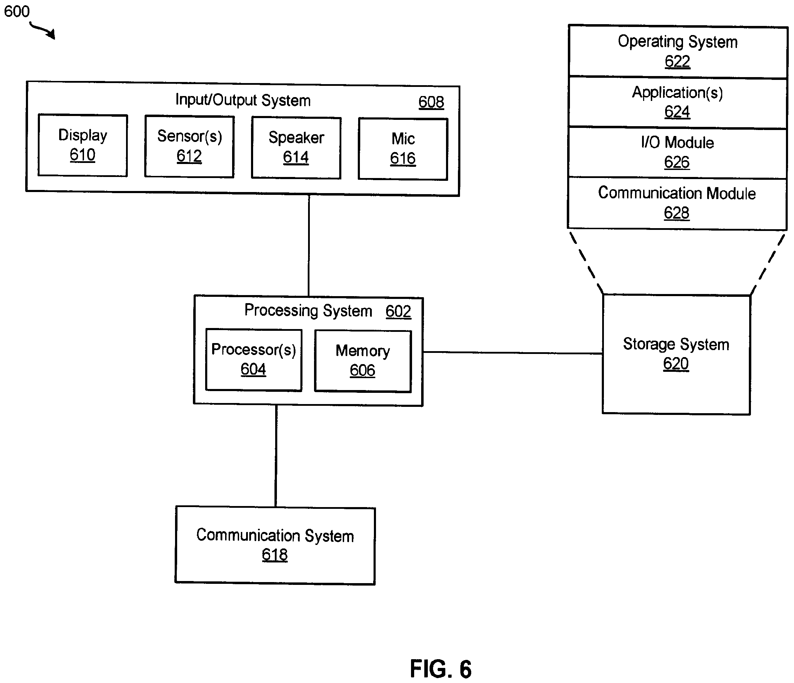

FIG. 6 illustrates an exemplary computing device 600 for implementing various embodiments described above. For example, computing device 600 may be used to implement client device 105. Computing device 600 may be a cellphone, a smartphone, a wearable device, an activity tracker or manager, a tablet, a personal digital assistant (PDA), a media player, or any other type of mobile computing device or combination thereof. As shown in FIG. 6, computing device 600 includes processing system 602, input/output (I/O) system 608, communication system 618, and storage system 620. These components may be coupled by one or more communication buses or signal lines.

Processing system 602, which can be implemented as one or more integrated circuits (e.g., a conventional microprocessor or microcontroller), controls the operation of computing device 600. As shown, processing system 602 includes one or more processors 604 and memory 606. Processors 604 are configured to run or execute various software and/or sets of instructions stored in memory 606 to perform various functions for computing device 600 and to process data.

Each processor of processors 604 may include one processing unit (e.g., a single core processor) or several processing units (e.g., a multicore processor). In some embodiments, processors 604 of processing system 602 may be implemented as independent processors while, in other embodiments, processors 604 of processing system 602 may be implemented as multiple processors integrate into a single chip. Still, in some embodiments, processors 604 of processing system 602 may be implemented as a combination of independent processors and multiple processors integrated into a single chip.

Memory 606 may be configured to receive and store software (e.g., operating system 622, applications 624, I/O module 626, communication module 628, etc. from storage system 620) in the form of program instructions that are loadable and executable by processors 604 as well as data generated during the execution of program instructions. In some embodiments, memory 606 may include volatile memory (e.g., random access memory (RAM)), non-volatile memory (e.g., read-only memory (ROM), programmable read-only memory (PROM), erasable programmable read-only memory (EPROM), electrically erasable programmable read-only memory (EEPROM), flash memory, etc.), or a combination thereof.

I/O system 608 is responsible for receiving input through various components and providing output through various components. As shown for this example, I/O system 608 includes display 610, one or more sensors 612, speaker 614, and microphone 616. Display 610 is configured to output visual information (e.g., a graphical user interface (GUI) generated and/or rendered by processors 604). In some embodiments, display 610 is a touch screen that is configured to also receive touch-based input. Display 610 may be implemented using liquid crystal display (LCD) technology, light-emitting diode (LED) technology, organic LED (OLED) technology, organic electro luminescence (OEL) technology, or any other type of display technologies. Sensors 612 may include any number of different types of sensors for measuring a physical quantity (e.g., temperature, force, pressure, acceleration, orientation, light, radiation, etc.). Speaker 614 is configured to output audio information and microphone 616 is configured to receive audio input. One of ordinary skill in the art will appreciate that I/O system 608 may include any number of additional, fewer, and/or different components. For instance, I/O system 608 may include a keypad or keyboard for receiving input, a port for transmitting data, receiving data and/or power, and/or communicating with another device or component, an image capture component for capturing photos and/or videos, etc.

Communication system 618 serves as an interface for receiving data from, and transmitting data to, other devices, computer systems, and networks. For example, communication system 618 may allow computing device 600 to connect to one or more devices via a network (e.g., a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.). Communication system 618 can include any number of different communication components. Examples of such components may include radio frequency (RF) transceiver components for accessing wireless voice and/or data networks (e.g., using cellular technologies such as 2G, 3G, 4G, 5G, etc., wireless data technologies such as Wi-Fi, Bluetooth, ZigBee, etc., or any combination thereof), global positioning system (GPS) receiver components, and/or other components. In some embodiments, communication system 618 may provide components configured for wired communication (e.g., Ethernet) in addition to or instead of components configured for wireless communication.

Storage system 620 handles the storage and management of data for computing device 600. Storage system 620 may be implemented by one or more non-transitory machine-readable mediums that are configured to store software (e.g., programs, code modules, data constructs, instructions, etc.) and store data used for, or generated during, the execution of the software.

In this example, storage system 620 includes operating system 622, one or more applications 624, I/O module 626, and communication module 628. Operating system 622 includes various procedures, sets of instructions, software components and/or drivers for controlling and managing general system tasks (e.g., memory management, storage device control, power management, etc.) and facilitates communication between various hardware and software components. Operating system 622 may be one of various versions of Microsoft Windows, Apple Mac OS, Apple OS X, Apple macOS, and/or Linux operating systems, a variety of commercially-available UNIX or UNIX-like operating systems (including without limitation the variety of GNU/Linux operating systems, the Google Chrome^{®} OS, and the like) and/or mobile operating systems such as Apple iOS, Windows Phone, Windows Mobile, Android, BlackBerry OS, Blackberry 10, and Palm OS, WebOS operating systems.

Applications 624 can include any number of different applications installed on computing device 600. Examples of such applications may include a browser application, an address book application, a contact list application, an email application, an instant messaging application, a word processing application, JAVA-enabled applications, an encryption application, a digital rights management application, a voice recognition application, location determination application, a mapping application, a music player application, etc.

I/O module 626 manages information received via input components (e.g., display 610, sensors 612, and microphone 616) and information to be outputted via output components (e.g., display 610 and speaker 614). Communication module 628 facilitates communication with other devices via communication system 618 and includes various software components for handling data received from communication system 618.

One of ordinary skill in the art will realize that the architecture shown in FIG. 6 is only an example architecture of computing device 600, and that computing device 600 may have additional or fewer components than shown, or a different configuration of components. The various components shown in FIG. 6 may be implemented in hardware, software, firmware or any combination thereof, including one or more signal processing and/or application specific integrated circuits.

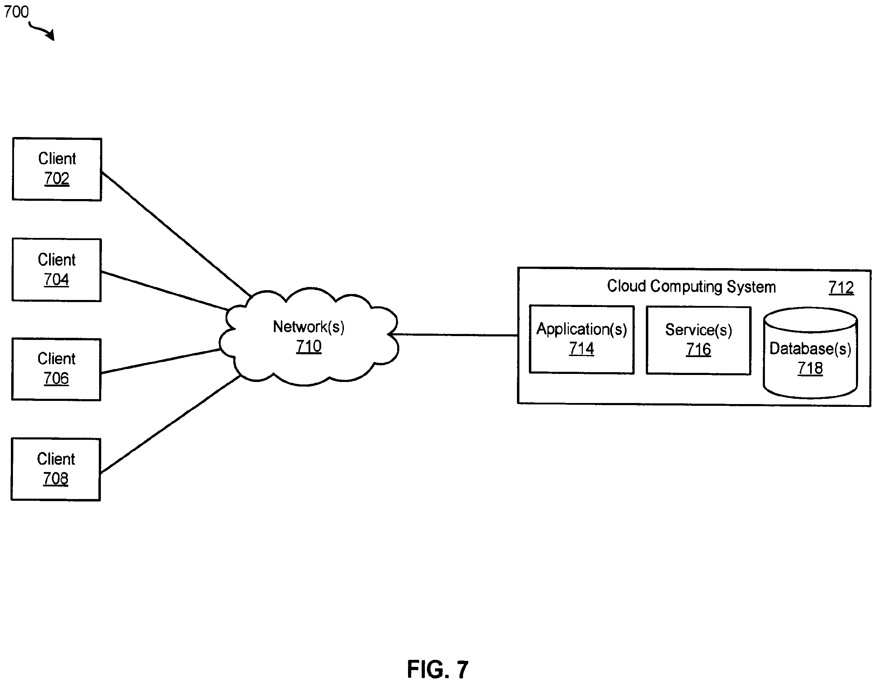

FIG. 7 illustrates an exemplary system 700 for implementing various embodiments described above. For example, cloud computing system 712 of system 700 may be used to implement data processing system 110 and a client device 702-708 may be used to implement client device 105. As shown, system 700 includes client devices 702-708, one or more networks 710, and cloud computing system 712. Cloud computing system 712 is configured to provide resources and data to client devices 702-708 via networks 710. In some embodiments, cloud computing system 700 provides resources to any number of different users (e.g., customers, tenants, organizations, etc.). Cloud computing system 712 may be implemented by one or more computer systems (e.g., servers), virtual machines operating on a computer system, or a combination thereof.

As shown, cloud computing system 712 includes one or more applications 714, one or more services 716, and one or more databases 718. Cloud computing system 700 may provide applications 714, services 716, and databases 718 to any number of different customers in a self-service, subscription-based, elastically scalable, reliable, highly available, and secure manner.

In some embodiments, cloud computing system 700 may be adapted to automatically provision, manage, and track a customer's subscriptions to services offered by cloud computing system 700. Cloud computing system 700 may provide cloud services via different deployment models. For example, cloud services may be provided under a public cloud model in which cloud computing system 700 is owned by an organization selling cloud services and the cloud services are made available to the general public or different industry enterprises. As another example, cloud services may be provided under a private cloud model in which cloud computing system 700 is operated solely for a single organization and may provide cloud services for one or more entities within the organization. The cloud services may also be provided under a community cloud model in which cloud computing system 700 and the cloud services provided by cloud computing system 700 are shared by several organizations in a related community. The cloud services may also be provided under a hybrid cloud model, which is a combination of two or more of the aforementioned different models.

In some instances, any one of applications 714, services 716, and databases 718 made available to client devices 702-708 via networks 710 from cloud computing system 700 is referred to as a "cloud service." Typically, servers and systems that make up cloud computing system 700 are different from the on-premises servers and systems of a customer. For example, cloud computing system 700 may host an application and a user of one of client devices 702-708 may order and use the application via networks 710.

Applications 714 may include software applications that are configured to execute on cloud computing system 712 (e.g., a computer system or a virtual machine operating on a computer system) and be accessed, controlled, managed, etc. via client devices 702-708. In some embodiments, applications 714 may include server applications and/or mid-tier applications (e.g., HTTP (hypertext transport protocol) server applications, FTP (file transfer protocol) server applications, CGI (common gateway interface) server applications, JAVA server applications, etc.). Services 716 are software components, modules, application, etc. that are configured to execute on cloud computing system 712 and provide functionalities to client devices 702-708 via networks 710. Services 716 may be web-based services or on-demand cloud services.

Databases 718 are configured to store and/or manage data that is accessed by applications 714, services 716, and/or client devices 702-708. For instance, storages 150 and 155 may be stored in databases 718. Databases 718 may reside on a non-transitory storage medium local to (and/or resident in) cloud computing system 712, in a storage-area network (SAN), on a non-transitory storage medium local located remotely from cloud computing system 712. In some embodiments, databases 718 may include relational databases that are managed by a relational database management system (RDBMS). Databases 718 may be a column-oriented databases, row-oriented databases, or a combination thereof. In some embodiments, some or all of databases 718 are in-memory databases. That is, in some such embodiments, data for databases 718 are stored and managed in memory (e.g., random access memory (RAM)).

Client devices 702-708 are configured to execute and operate a client application (e.g., a web browser, a proprietary client application, etc.) that communicates with applications 714, services 716, and/or databases 718 via networks 710. This way, client devices 702-708 may access the various functionalities provided by applications 714, services 716, and databases 718 while applications 714, services 716, and databases 718 are operating (e.g., hosted) on cloud computing system 700. Client devices 702-708 may be computer system 500 or computing device 600, as described above by reference to FIGS. 5 and 6, respectively. Although system 700 is shown with four client devices, any number of client devices may be supported.

Networks 710 may be any type of network configured to facilitate data communications among client devices 702-708 and cloud computing system 712 using any of a variety of network protocols. Networks 710 may be a personal area network (PAN), a local area network (LAN), a storage area network (SAN), a campus area network (CAN), a metropolitan area network (MAN), a wide area network (WAN), a global area network (GAN), an intranet, the Internet, a network of any number of different types of networks, etc.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. Based on the above disclosure and the following claims, other arrangements, embodiments, implementations and equivalents will be evident to those skilled in the art and may be employed without departing from the scope of the invention as defined by the claims.

## Claims

1. A method (400) comprising:
receiving, from a client device (105) by an application (115) comprised in a data processing system (110), a request for a set of data stored in a data model (150), the request for the set of data being sent from the client device (105) in response to a user of the client device (105) selecting a user interface item (355) of a graphical user interface, GUI (300),
wherein the data model (150) is specified as a data source by the user of the client device (105) using the GUI (300),
wherein the data model (150) is defined by specifying one or more tables which include a set of measures and a set of dimensions,
wherein a measure of the set of measures is an attribute in the one or more tables that is configured to store a numeric value,
wherein a dimension in the set of dimensions is an attribute in the one or more tables that is configured to store a value associated with the measure used for categorizing the measure,
wherein one or more measures of the data model (150) and one or more dimensions of the data model (150) are further specified by the user of the client device (105) using the GUI (300),
wherein a set of scripts is provided by the user of the client device (105) using a script tool (350) of the GUI (300);
retrieving the set of data from a data models storage (150), by the application (115) in response to the request for the set of data;
sending (210), by the application (115) to a runtime processor (120) comprised in the data processing system (110), the set of data and a request to load the set of data;
storing (215), by the runtime processor (120), the set of data in a cache storage (155) comprised in the data processing system (110);
generating, by the runtime processor (120), a unique identifier associated with the set of data;
sending (220, 225), by the runtime processor (120) via the application (115), the unique identifier to the client device (105);
receiving (410), by the runtime processor (120) from the client device (105) via the application (115), the unique identifier and a request to execute the set of scripts on the set of data in the data model (150);
retrieving (240), by the runtime processor (120), the set of data from the cache storage (155);
sending (245), by the runtime processor (120) to a runtime manager (125) comprised in the data processing system (110), a request for a runtime instance;
identifying (420), by the runtime manager (125), in response to the request for the runtime instance, an available virtual machine, VM, in a plurality of VMs (130a, 130b, 130n) comprised in the data processing system (110);
loading (430), by the runtime manager (125), a runtime instance (135) configured to execute the set of scripts onto the identified VM;
determining, by the runtime manager (125), connection information for connecting to the runtime instance (135) on the identified VM;
sending (250), by the runtime manager (125) to the runtime processor (120), the connection information;
establishing, by the runtime processor (120), a connection to the runtime instance using the connection information received from the runtime manager (125);
compressing, by the runtime processor (120), the set of data and the set of scripts into a single file;
instructing (440, 255), by the runtime processor (120), the runtime instance (135) to execute the set of scripts in order to generate a visualization of the set of data, said instructing (440, 255) comprising sending the single file to the runtime instance (135);
sending (450), by the runtime processor (120) via the application (115), the generated visualization of the set of data to the client device (105);
removing, by the runtime manager (125), the runtime instance (135) from the identified VM; and
returning, by the runtime manager (125), the identified VM as an available VM in the plurality of VMs (130a, 130b, 130n),
wherein, the method further comprises:
in case the request to execute the set of scripts specifies the use of an external runtime instance (145) on an external VM (140) implemented on a system separate from the data processing system (110) and includes connection information to connect to the external runtime instance (145),
establishing a connection with the external runtime instance (145) by the runtime processor (120) using the connection information provided in the request; and
executing the set of scripts on the external runtime instance (145).

2. The method (400) of claim 1, wherein the set of scripts are written using a statistical computing scripting language.

3. A non-transitory machine-readable medium (520) storing a program executable by at least one processing unit (506) of a computing device, the program comprising sets of instructions that when executed by the at least one processing unit (506) of the computing device cause the at least one processing unit (506) of the computing device to perform and/or allow performance of the method according to claim 1 or 2.

4. A system (500) comprising:
a set of processing units (506); and
a non-transitory computer-readable medium (520) storing instructions that when executed by at least one processing unit in the set of processing units (506) cause the at least one processing unit to perform the method according to claim 1 or 2.

## Patentansprüche

1. Verfahren (400), umfassend:
Empfangen, von einer Client-Vorrichtung (105), durch eine Anwendung (115), die von einem Datenverarbeitungssystem (110) aufgewiesen wird, einer Anfrage für einen in einem Datenmodell (150) gespeicherten Datensatz, wobei die Anfrage für den Datensatz von der Client-Vorrichtung (105) als Reaktion darauf gesendet wird, dass ein Nutzer der Client-Vorrichtung (105) ein Nutzerschnittstellenelement (355) einer graphischen Benutzeroberfläche, GUI (300), auswählt,
wobei das Datenmodell (150) durch den Nutzer der Client-Vorrichtung (105) unter Verwendung der GUI (300) als eine Datenquelle vorgegeben wird,
wobei das Datenmodell (150) durch Vorgeben von einer oder mehreren Tabellen definiert wird, welche einen Satz von Maßen und einen Satz von Dimensionen beinhalten;
wobei ein Maß des Satzes von Maßen ein Attribut in der einen oder mehreren Tabellen ist, welches konfiguriert ist, einen numerischen Wert zu speichern;
wobei eine Dimension in dem Satz von Dimensionen ein Attribut in der einen oder mehreren Tabellen ist, das konfiguriert sind, einen Wert zu speichern, welcher dem Maß zugeordnet ist, die zum Kategorisieren des Maßes verwendet wird,
wobei ein oder mehr Maße des Datenmodells (150) und eine oder mehr Dimensionen des Datenmodells (150) durch den Nutzer der Client-Vorrichtung (105) mithilfe der GUI (300) weiter konkretisiert werden,
wobei durch den Nutzer der Client-Vorrichtung (105) mithilfe eines Skript-Tools (350) der GUI (300) ein Skriptsatz bereitgestellt wird;
Abrufen des Datensatzes aus einem Datenmodellspeicher (150) durch die Anwendung (115) als Reaktion auf die Anfrage nach dem Datensatz;
Senden (210) des Datensatzes und einer Anfrage zum Laden des Datensatzes an einen Laufzeitprozessor (120), der von dem Datenverarbeitungssystem (110) aufgewiesen wird, durch die Anwendung (115),
Speichern (215) des Datensatzes in einem Cache-Speicher (155), der von dem Datenverarbeitungssystem (110) aufgewiesen wird, durch den Laufzeitprozessor (120);
Erzeugen einer eindeutigen Kennung, die dem Datensatz zugeordnet ist, durch den Laufzeitprozessor (120);
Senden (220, 225) der eindeutigen Kennung an die Client-Vorrichtung (105) über die Anwendung (115) durch den Laufzeitprozessor (120);
Empfangen (410) der eindeutigen Kennung und einer Anfrage zum Ausführen des Skriptsatzes auf dem Datensatz in dem Datenmodell (150) durch den Laufzeitprozessor (120) von der Client-Vorrichtung (105) über die Anwendung (115);
Abrufen (240), durch den Laufzeitprozessor (120), des Datensatzes aus dem Cache-Speicher (155);
Senden (245) einer Anfrage für eine Laufzeitinstanz durch den Laufzeitprozessor (120) an einen Laufzeit-Manager (125), der von dem Datenverarbeitungssystem (110) aufgewiesen wird,
Identifizieren (420), durch den Laufzeit-Manager (125), als Reaktion auf die Anfrage für die Laufzeitinstanz, einer verfügbaren virtuellen Maschine, VM, in einer Vielzahl von VMs (130a, 130b, 130n), die von dem Datenverarbeitungssystem (110) aufgewiesen werden;
Laden (430), durch den Laufzeitmanager (125), einer Laufzeitinstanz (135), die konfiguriert ist, den Skriptsatz auszuführen, auf die identifizierte VM;
Bestimmen, durch den Laufzeitmanager (125), von Verbindungsinformationen zum Verbinden mit der Laufzeitinstanz (135) auf der identifizierten VM;
Senden (250) der Verbindungsinformationen durch den Laufzeitmanager (125) an den Laufzeitprozessor (120);
Herstellen, durch den Laufzeitprozessor (120), einer Verbindung zu der Laufzeitinstanz vermittels der Verbindungsinformationen, die von dem Laufzeit-Manager (125) erhalten werden,
Komprimieren des Datensatzes und des Skriptsatzes zu einer einzigen Datei durch den Laufzeitprozessor (120);
Anweisen (440, 255) der Laufzeitinstanz (135), den Skriptsatz auszuführen, um eine Visualisierung des Dantesatzes zu erzeugen, wobei das Anweisen (440,255) das Senden der einzelnen Datei an die Laufzeitinstanz (135) umfasst;
Senden (450) der erzeugten Visualisierung des Datensatzes an die Client-Vorrichtung (105) durch den Laufzeitprozessor (120) über die Anwendung (115),
Entfernern der Laufzeitinstanz (135) aus der identifizieren VM durch den Laufzeit-Manager (125);
Zurückgeben der identifizierten VM in der Vielzahl von VMs (130a, 130b, 130n) als eine verfügbare VM durch den Laufzeit-Manager (125),
wobei das Verfahren ferner umfasst:
im Fall, dass die Anfrage zum Ausführen des Skriptsatzes die Verwendung einer externen Laufzeitinstanz (145) auf einer externen VM (140) vorgibt, die auf einem System getrennt von dem Datenverarbeitungssystem (110) implementiert ist, und Verbindungsinformationen zur Verbindung mit der externen Laufzeitinstanz (145) beinhaltet,
Herstellen einer Verbindung mit der externen Laufzeitinstanz (145) durch den Laufzeitprozessor (12) vermittels der in der Anfrage bereitgestellten Verbindungsinformationen; und
Ausführen des Skriptsatzes auf der externen Laufzeitinstanz (145).

2. Verfahren (400) nach Anspruch 1, wobei der Skriptsatz vermittels einer Scriptsprache für Statistical Computing geschrieben ist.

3. Nichtflüchtiges maschinenlesbares Medium (520), auf dem ein durch zumindest eine Verarbeitungseinheit (506) einer Rechenvorrichtung ausführbares Programm gespeichert ist, wobei das Programm eine Reihe von Anweisungen aufweist, die, wenn sie von der zumindest einen Verarbeitungseinheit (506) der Rechenvorrichtung ausgeführt werden, die zumindest eine Verarbeitungseinheit (506) der Rechenvorrichtung veranlassen, das Verfahren nach einem der Ansprüche 1 oder 2 durchzuführen und/oder dessen Durchführung zu erlauben.

4. System (500), aufweisend:
eine Reihe von Verarbeitungseinheiten (506); und
ein nichtflüchtiges computerlesbares Medium (520), das Anweisungen speichert, die, wenn sie von zumindest einer Verarbeitungseinheit in der Menge von Verarbeitungseinheiten (506) ausgeführt wird, die zumindest eine Verarbeitungseinheit veranlassen, das Verfahren nach Anspruch 1 oder 2 durchzuführen.

## Revendications

1. Procédé (400) comprenant :
la réception, à partir d'un dispositif client (105) par une application (115) comprise dans un système de traitement de données (110), d'une demande d'ensemble de données stockées dans un modèle de données (150), la demande d'ensemble de données étant envoyée à partir du dispositif client (105) en réponse à une sélection par un utilisateur du dispositif client (105) d'un article d'interface utilisateur (355) d'une interface utilisateur graphique, GUI (300),
dans lequel le modèle de données (150) est spécifié en tant que source de données par l'utilisateur du dispositif client (105) au moyen de la GUI (300),
dans lequel le modèle de données (150) est défini par la spécification d'un ou de plusieurs tableaux qui incluent un ensemble de mesures et un ensemble de dimensions,
dans lequel une mesure de l'ensemble de mesures est un attribut dans le ou les tableaux qui est configuré pour stocker une valeur numérique,
dans lequel une dimension dans l'ensemble de dimensions est un attribut dans le ou les tableaux qui est configuré pour stocker une valeur associée à la mesure utilisée pour catégoriser la mesure,
dans lequel une ou plusieurs mesures du modèle de données (150) et une ou plusieurs dimensions du modèle de données (150) sont en outre spécifiées par l'utilisateur du dispositif client (105) au moyen de la GUI (300),
dans lequel un ensemble de scripts est fourni par l'utilisateur du dispositif client (105) au moyen d'un outil de script (350) de la GUI (300) ;
la récupération de l'ensemble de données à partir d'une mémoire de modèles de données (150), par l'application (115) en réponse à la demande d'ensemble de données ;
l'envoi (210), par l'application (115) à un processeur d'exécution (120) compris dans le système de traitement de données (100), de l'ensemble de données et d'une demande de charge de l'ensemble de données ;
le stockage (215), par le processeur d'exécution (120), de l'ensemble de données dans une mémoire cache (155) comprise dans le système de traitement de données (110) ;
la génération, par le processeur d'exécution (120), d'un identifiant unique associé à l'ensemble de données ;
l'envoi (220, 225), par le processeur d'exécution (120) via l'application (115), de l'identifiant unique au dispositif client (105) ;
la réception (410), par le processeur d'exécution (120) à partir du dispositif client (105) via l'application (115), de l'identifiant unique et d'une demande d'exécution de l'ensemble de scripts sur l'ensemble de données dans le modèle de données (150) ;
la récupération (240), par le processeur d'exécution (120), de l'ensemble de données à partir de la mémoire cache (155) ;
l'envoi (245), par le processeur d'exécution (120) à un gestionnaire d'exécution (125) compris dans le système de traitement de données (110), d'une demande d'instance d'exécution ;
l'identification (420), par le gestionnaire d'exécution (125), en réponse à la demande d'instance d'exécution, d'une machine virtuelle disponible, VM, dans une pluralité de VM (130a, 130b, 130n) comprises dans le système de traitement de données (110) ;
le chargement (430), par le gestionnaire d'exécution (125), d'une instance d'exécution (135) configurée pour exécuter l'ensemble de scripts sur la VM identifiée ;
la détermination, par le gestionnaire d'exécution (125), d'informations de connexion permettant de se connecter à l'instance d'exécution (135) sur la VM identifiée ;
l'envoi (250), par le gestionnaire d'exécution (125) au processeur d'exécution (120), des informations de connexion ;
l'établissement, par le processeur d'exécution (120), d'une connexion à l'instance d'exécution au moyen des informations de connexion reçues à partir du gestionnaire d'exécution (125) ;
la compression, par le processeur d'exécution (120), de l'ensemble de données et de l'ensemble de scripts en un seul fichier ;
l'instruction (440, 255), par le processeur d'exécution (120), de l'instance d'exécution (135) pour exécuter l'ensemble de scripts afin de générer une visualisation de l'ensemble de données, ladite instruction (440, 255) comprenant l'envoi du seul fichier à l'instance d'exécution (135) ;
l'envoi (450), par le processeur d'exécution (120) via l'application (115), de la visualisation générée de l'ensemble de données au dispositif client (105) ;
le retrait, par le gestionnaire d'exécution (125), de l'instance d'exécution (135) à partir de la VM identifiée ; et
le retour, par le gestionnaire d'exécution (125), de la VM identifiée en tant que VM disponible dans la pluralité de VM (130a, 130b, 130n),
dans lequel, le procédé comprend en outre
au cas où la demande d'exécution de l'ensemble de scripts spécifie l'utilisation d'une instance d'exécution externe (145) sur une VM externe (140) mise en oeuvre sur un système distinct du système de traitement de données (110) et inclut des informations de connexion pour se connecter à l'instance d'exécution externe (145),
l'établissement d'une connexion avec l'instance d'exécution externe (145) par le processeur d'exécution (120) au moyen des informations de connexion fournies dans la demande ; et
l'exécution de l'ensemble de scripts sur l'instance d'exécution externe (145).

2. Procédé (400) selon la revendication 1, dans lequel l'ensemble de scripts est écrit au moyen d'un langage de script de calcul statistique.

3. Support lisible par machine non transitoire (520) stockant un programme pouvant être exécuté par au moins une unité de traitement (506) d'un dispositif de calcul, le programme comprenant des ensembles d'instructions qui lorsqu'elles sont exécutées par l'au moins une unité de traitement (506) du dispositif de calcul amènent l'au moins une unité de traitement (506) du dispositif de calcul à réaliser et/ou à permettre une performance du procédé selon la revendication 1 ou 2.

4. Système (500) comprenant :
un ensemble d'unités de traitement (506) ; et
un support lisible par ordinateur non transitoire (520) stockant des instructions qui lorsqu'elles sont exécutées par au moins une unité de traitement dans l'ensemble d'unités de traitement (506) amènent l'au moins une unité de traitement à réaliser le procédé selon la revendication 1 ou 2.
